# EUROPÄISCHE PATENTSCHRIFT

(11) **EP 0 699 799 B1**
(45) Veröffentlichungstag und Bekanntmachung des Hinweises auf die Patenterteilung: **17.12.1997**
(21) Anmeldenummer: 95109667.6
(22) Anmeldetag: 22.06.1995
(51) Int. Cl.: D21G 1/02, F16C 32/06, F16C 13/00

(54) **Durchbiegungsgesteuerte Walze**
Deflexion controlled roll
Rouleau à déflection réglable

(30) Priorität: 29.08.1994 DE 4430667
(43) Veröffentlichungstag der Anmeldung: 06.03.1996
(73) Patentinhaber: Voith Sulzer Papiermaschinen GmbH, 89509 Heidenheim (DE)
(72) Erfinder: Brandiser, Herbert, D-88284 Mochenwangen (DE); Link, Christoph, D-88250 Weingarten (DE)
(74) Vertreter: Knoblauch, Ulrich, Dr.-Ing.

(56) Entgegenhaltungen:
- EP-A- 0 451 470
- CH-A- 673 051
- FR-A- 2 368 631
- PAPIER, DAS, Bd. 43, Nr. 10A, 1.Oktober 1989 Seiten 169-182, XP 000081773 BRESSER H ET AL 'SNC - DER SUPERKALANDAR DER 90ER JAHRE'

## Beschreibung

Die Erfindung betrifft eine durchbiegungsgesteuerte Walze gemäß dem Oberbegriff des Anspruches 1, die bei der Herstellung oder Behandlung von bahnförmigem Material eingesetzt wird.

Derartige Walzen sind bekannt, wobei beispielsweise in der DE-AS 27 59 035 eine Walze mit gruppenweise zusammengefaßten Stützelementen beschrieben wird, die jeweils von einer Druckleitung versorgt werden. Die Schmierung der abstützenden Fläche der Lagerschuhe erfolgt hier über hydrostatische Lagertaschen, die mit dem jeweiligen Druckraum der Zylinder-Kolben-Vorrichtung des Stützelementes in Verbindung stehen.

Aus der CH-PS 673 051 ist eine Lösung bekannt, bei der im Unterschied dazu die Zuführung des Druckfluids zu den Druckräumen der Zylinder-Kolben-Vorrichtungen getrennt von der Zuführung des Schmierfluids zu den Lagertaschen der Lagerschuhe geschieht. Neben der thermischen Trennung der Fluidkreisläufe ergeben sich bei dieser Variante insbesondere dadurch Vorteile, daß die Schmierung unabhängig vom Druckkreislauf ist.

Es verbleibt jedoch der Nachteil, daß diese Walzen wegen ihrer Kompliziertheit bezüglich eventuell auftretender Schwingungen schwer berechenbar sind und damit auch nur in beschränktem Maße Schwingungen gedämpft werden können. Außerdem ist ein unterschiedliches Reaktionsverhalten hinsichtlich der Schwingungen sowie bei u.U. auftretender, wenn auch geringfügiger Leckage der Druckleitungen oder der Zylinder-Kolben-Vorrichtungen entlang der Walzenachse zu verzeichnen. Verstärkt tritt dieser Aspekt bei Walzen mit einer großen Anzahl von Stützelementen in den Vordergrund. Eine große Anzahl von Druckleitungen erfordert nämlich auch wegen der Begrenztheit durch die Walze oder den Träger einen geringeren Durchmesser der Druckleitungen. Dies wiederum beeinflußt das Dämpfungs- und Druckspeicherverhalten der Druckleitungen.

Der Erfindung liegt daher die Aufgabe zugrunde, eine durchbiegungsgesteuerte Walze zu schaffen, die insbesondere auch bei der Abstützung über sehr viele Stützelemente mit einfachen Mitteln schwingungsdämpfend ausgeführt werden kann.

Erfindungsgemäß wurde die Aufgabe durch die im Anspruch 1 beschriebene Vorrichtung gelöst, wobei die Unteransprüche besondere Ausführungsformen darstellen.

Dadurch, daß die zwischen dem Druckerzeuger und den Stützelementen vorhandenen Druckleitungen unabhängig von der Entfernung zwischen der Zylinder-Kolben-Vorrichtung des jeweiligen Stützelementes und dem den entsprechenden Druckleitungsanschluß zugeordneten Walzenende etwa die gleiche Länge aufweisen, kommt es zu einem Ausgleich des Schwingungsverhaltens der Druckleitungen. Dasselbe gilt, wenn das Fassungsvolumen der Druckleitungen für das Druckfluid etwa gleich ist.

Werden beide Maßnahmen gleichzeitig realisiert, so verbessert sich das Ergebnis dementsprechend. Außerdem gleicht sich in diesem Fall das Drosselverhalten der Druckleitungen an, was insbesndere bei einem geringen Durchmesser der Druckleitungen Bedeutung gewinnt.

Von Vorteil ist es auch, wenn die Druckleitungen zumindest abschnittsweise aus flexiblem, dehnbaren und schwingungsdämpfenden Material bestehen. Neben einer Erleichterung beim Verlegen der Druckleitung führt dies außerdem zu einer Verbesserung der Druckspeicherung im Fall von Leckage. Es ist dabei zu empfehlen, daß der in der Walze befindliche Teil der Druckleitungen etwa die gleiche Länge hat und/oder etwa das gleiche Fassungsvolumen für das Druckfluid besitzt.

Für den Anschluß der Druckleitungen vom Druckerzeuger an den in der Walze verlaufenden Teil der Druckleitungen sollte zur Erleichterung der Montage eine Mehrfachkupplung verwendet werden.

Ganz allgemein sollte zur Vergleichmäßigung des Verhaltens der Druckleitungen und damit auch der Walze, insbesondere entlang deren Walzenachse, ein identischer Aufbau der Druckleitungen angestrebt werden. Dies gilt nicht nur für die Gestaltung sondern auch für das Material.

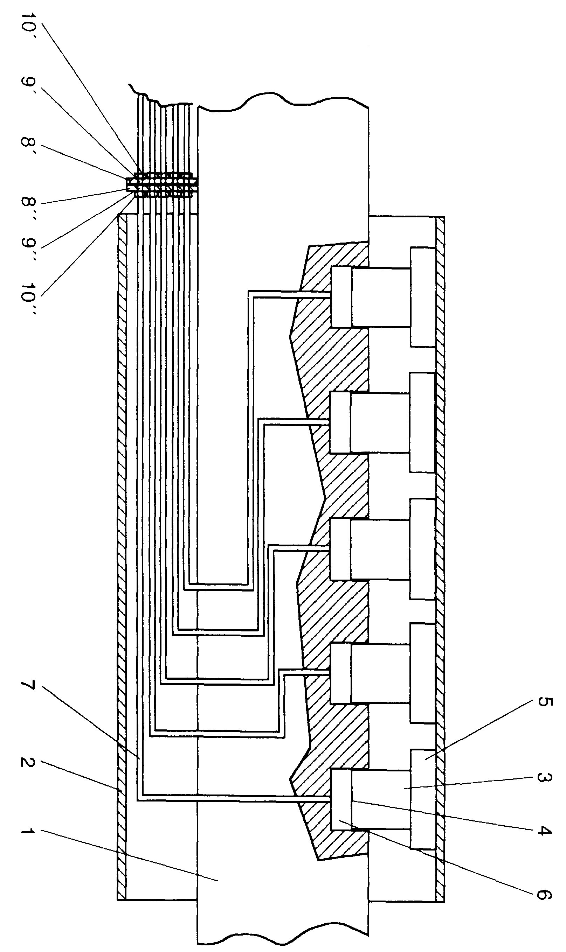

Nachfolgend soll die Erfindung an einem Ausführungsbeispiel näher erläutert werden. In der beigefügten Zeichnung zeigt die Figur eine stark schematisierte Schnittdarstellung entlang der Achse einer durchbiegungsgesteuerten Walze.

Diese Walze besteht im wesentlichen aus einem Träger 1 und einem um diesen rotierbaren Walzenmantel 2, der sich über mehrere axial nebeneinander angeordnete Stützelemente 3 am Träger 1 abstützt. Derartige durchbiegungsgesteuerte Walzen bilden vorzugsweise mit anderen Walzen einen Spalt zur Herstellung oder Behandlung von bahnförmigem Material, beispielsweise Faserstoffbahnen.

Um selbst auf örtlich begrenzte Unregelmäßigkeiten der Faserstoffbahn einwirken zu können, ist die Realisierung vieler axial bezüglich der Walze nebeneinander angeordneter Druckzonen wichtig. Damit Stützelemente 3 von beispielsweise 40 - 100 mm Breite nur örtlich begrenzt Wirkung zeigen, sind in diesen Fällen flexible Walzenmäntel 2 von großer Bedeutung.

Die Stützelemente 3 besitzen jeweils eine Zylinder-Kolben-Vorrichtung 4 zur Bildung einer Anpreßkraft und einen Lagerschuh 5. Die Fluidspeisung der Druckräume 6 der Zylinder-Kolben-Vorrichtungen 4 erfolgt hier getrennt voneinander über Druckleitungen 7.

Damit die Druckleitungen 7 in Bezug auf Schwingung und Drosselung zumindest ein ähnliches Verhalten zeigen, weisen die Druckleitungen 7 im wesentlichen die gleiche Länge und das gleiche Fassungsvolumen für das Druckfluid auf.

Außerdem besteht hierbei zumindest der in der Walze verlaufende Teil der Druckleitungen 7 aus flexiblen, möglichst dehnbarem Material. Dies bietet die Möglichkeit, die identisch aufgebauten Druckleitungen 7 so zu verlegen, daß der in der Walze befindliche Teil die gleiche Länge hat. Damit wird die erfindungsgemäße Maßnahme bereits bei der Herstellung der Walze und nicht erst beim Anschluß an die externe hydraulische Steuerung durchgeführt. Außerdem erhöht das dehnbare Material neben der Schwingungsdämpfung auch das Druckspeichervermögen der Druckleitungen 7, so daß eine geringe Leckage des Druckfluids ohne nennenswerte Wirkung auf die Anpreßkraft des betreffenden Stützelementes 3 bleibt. Dadurch ist es möglich, die Druckleitungen 7 zeitweise von dem außerhalb der Walze vorhandenen Druckerzeuger zu trennen. Eine Verbindung mit dem Druckerzeuger könnte zyklisch oder nur dann erfolgen, wenn der Druck in einem Druckraum 6 einer Zylinder-Kolben-Vorrichtung 4 eines Stützelementes 3 geändert werden soll, sofern eine bestimmte Zeitgrenze beispielsweise im Minutenbereich nicht überschritten ist. Dies dient der Verringerung des Steuerungsaufwandes, insbesondere bei durchbiegungsgesteuerten Walzen mit sehr vielen Stützelementen 3.

Zur Vereinfachung der Montage ist es von Vorteil, wenn alle Druckleitungen 7 über eine leicht lösbare Mehrfachkupplung 8 aus der Walze geführt werden. Dies kann zum Beispiel über zwei gegeneinander abgedichtete und lösbar miteinander verbundene Lochplatten 8', 8'' erfolgen, deren Löcher 9', 9'' sich überdecken und jeweils mit einem Anschluß 10', 10'' einer Druckleitung 7 verbunden sind.

Des weiteren ist es zur Verbesserung des Schwingungsverhaltens möglich, die Druckleitungen 7 mit zusätzlichen Dämpfungselementen zu versehen.

Die Schmierung der Spalten zwischen den Lagerschuhen 5 und dem Walzenmantel 2 kann unabhängig von der Druckfluidversorgung auf hydrostatische oder hydrodynamische Weise erfolgen.

Es ist hierbei natürlich auch möglich, daß die Lagerschuhe 5 der Stützelemente 3 gleichzeitig Teil einer sich über mehrere Stützelemente 3 erstreckenden Leiste sind.

## Patentansprüche

1. Durchbiegungsgesteuerte Walze, bestehend aus einem feststehenden Träger (1) und einem um diesen rotierbaren Walzenmantel (2), der sich über mehrere Stützelemente (3) am Träger (1) abstützt, wobei die Stützelemente (3) jeweils zumindest eine Zylinder-Kolben-Vorrichtung (4) zur Bildung einer Anpreßkraft und einen Lagerschuh (5) mit separater Schmierfluidversorgung besitzen und die Fluidspeisung der Druckräume (6) der Zylinder-Kolben-Vorrichtungen (4) zumindest gruppenweise getrennt voneinander über Druckleitungen (7) erfolgt,
**dadurch gekennzeichnet**,
daß die Druckleitungen (7) etwa die gleiche Länge aufweisen und/oder etwa das gleiche Fassungsvolumen für das Druckfluid besitzen.

2. Durchbiegungsgesteuerte Walze nach Anspruch 1,
**dadurch gekennzeichnet**,
daß die Druckleitungen (7) zumindest abschnittsweise aus flexiblem, schwingungsdämpfenden Material bestehen.

3. Durchbiegungsgesteuerte Walze nach Anspruch 1 oder 2,
**dadurch gekennzeichnet**,
daß der in der Walze befindliche Teil der Druckleitungen (7) etwa die gleiche Länge hat und/oder etwa das gleiche Fassungsvolumen für das Druckfluid besitzt.

4. Durchbiegungsgesteuerte Walze nach einem der Ansprüche 1 bis 3,
**dadurch gekennzeichnet**,
daß die Druckleitungen (7) über eine Mehrfachkupplung (8) aus der Walze geführt sind.

5. Durchbiegungsgesteuerte Walze nach einem der Ansprüche 1 bis 4.
**dadurch gekennzeichnet**,
daß die Druckleitungen (7) hinsichtlich Konstruktion und Material identisch aufgebaut sind.

## Claims

1. Controlled-deflection roll, consisting of a stationary support (1) and a roll casing (2) which is rotatable about the latter and which is supported on the support (1) by several supporting elements (3), wherein the supporting elements (3) have in each case at least one piston and cylinder arrangement (4) to form a contact pressure and a bearing block (5) with separate lubricating fluid supply, and the fluid supply to the pressure chambers (6) of the piston and cylinder arrangements (4) takes place at least in groups separately from each other via pressure lines (7), characterised in that the pressure lines (7) exhibit approximately the same length and/or have approximately the same capacity for the pressure fluid.

2. Controlled-deflection roll according to claim 1, characterised in that the pressure lines (7) at least in sections are made of flexible, vibration-damping material.

3. Controlled-deflection roll according to claim 1 or 2, characterised in that the portion of the pressure lines (7) located in the roll has approximately the same length and/or approximately the same capacity for the pressure fluid.

4. Controlled-deflection roll according to any of claims 1 to 3, characterised in that the pressure lines (7) extend out of the roll via a multiple coupling (8).

5. Controlled-deflection roll according to any of claims 1 to 4, characterised in that the pressure lines (7) are identically constructed with regard to design and material.

## Revendications

1. Cylindre commandé en flexion, constitué d'un support (1) fixe et d'une enveloppe (2) de cylindre pouvant tourner autour de ce dernier, qui prend appui sur le support (1) par l'intermédiaire de plusieurs éléments de support (3), les éléments de support (3) comportant chacun au moins un vérin (4) destiné à générer une force d'application et un coussinet de palier (5) avec alimentation séparée en fluide de graissage, et les chambres de pression (6) des vérins (4) étant alimentées en fluide sous pression par l'intermédiaire de lignes sous pression (7) en étant séparées au moins par groupes les unes des autres,
**caractérisé en ce que**
les lignes sous pression (7) ont sensiblement la même longueur et/ou sensiblement la même capacité en volume pour le fluide sous pression.

2. Cylindre commandé en flexion selon la revendication 1,
**caractérisé en ce que**
les lignes sous pression (7) sont constituées, au moins par tronçons, de matériau flexible et amortissant les oscillations.

3. Cylindre commandé en flexion selon la revendication 1 ou 2,
**caractérisé en ce que**
la partie des lignes sous pression (7) se trouvant dans le cylindre a sensiblement la même longueur et/ou sensiblement la même capacité en volume pour le fluide sous pression.

4. Cylindre commandé en flexion selon l'une des revendications 1 à 3,
**caractérisé en ce que**
les lignes sous pression (7) sortent du cylindre par l'intermédiaire d'un couplage multiple (8).

5. Cylindre commandé en flexion selon l'une des revendications 1 à 4,
**caractérisé en ce que**
les lignes sous pression (7) sont agencées de la même manière du point de vue construction et matériau.
